# EUROPÄISCHE PATENTANMELDUNG

(11) **EP 4 194 265 A1**
(43) Veröffentlichungstag der Anmeldung: **14.06.2023**
(21) Anmeldenummer: 22212716.9
(22) Anmeldetag: 12.12.2022
(51) Int. Cl.: B60P 3/36

(54) **FREIZEITFAHRZEUG, INSBESONDERE WOHNMOBIL ODER WOHNWAGEN, MIT EINER ANORDNUNG**

(30) Priorität: 11.12.2021 DE 102021132773
(71) Anmelder: Erwin Hymer Group SE, 88339 Bad Waldsee (DE)
(72) Erfinder: Buck, Rainer, 88239 Wangen (DE); Metzler, Marcus, 88339 Bad Waldsee (DE); Dorn, Günter, 88281 Schlier (DE)
(74) Vertreter: Waller, Stefan

(57) **Zusammenfassung**

Anordnung (2) für ein Freizeitfahrzeug (1), insbesondere für ein Wohnmobil oder einen Wohnwagen, wobei Installationsleitungen (7, 8, 9, 10) an einer ersten Seite (11) des Freizeitfahrzeugs (1) angeordnet sind und sich über einen ersten Installationsbereich (13) an der ersten Seite (11) erstrecken. Ferner sind Installationsleitungen (7', 8', 9', 10') an einer zweiten Seite (12) des Freizeitfahrzeugs (1) angeordnet, die sich über einen zweiten Installationsbereich (14) an der zweiten Seite (12) des Freizeitfahrzeugs (1) erstrecken. Die Installationsleitungen (7, 8, 9, 10) an der ersten Seite (11) sind mit den Installationsleitungen (7', 8', 9', 10') an der zweiten Seite (12) verbunden. Ferner ist ein Freizeitfahrzeug (1) mit solch einer Anordnung (2) angegeben.

## Beschreibung

Die Erfindung betrifft eine Anordnung für ein Freizeitfahrzeug, insbesondere ein Wohnmobil oder einen Wohnwagen, wobei Installationsleitungen zur Installation vorgesehen sind, und ein Freizeitfahrzeug mit solch einer Anordnung.

Aus der DE 20 2011 003 731 U1 ist ein Freizeitfahrzeug mit einer Schlafgelegenheit, einer Sitzgruppe und einer Heckgarage bekannt. Hierbei schließt sich die Sitzgruppe an die Heckgarage des Wohnmobils an. Hierbei sind ein Grundriss für eine Nutzung über den Tag und ein Grundriss für eine Nutzung über die Nacht vorgegeben. Das Wohnmobil umfasst einen Aufenthaltsraum, das heißt einen Wohnraum, sowie eine Fahrerkabine. Im Wohnraum sind ein separat stehender Kühlschrank sowie ein Bad mit Dusche, Waschbecken und WC vorgesehen. Neben der Eingangstür zum Wohnraum ist eine große Längsküche mit einem daneben sehenden Schrank angeordnet.

Freizeitfahrzeuge gibt es generell mit unterschiedlichen Grundrissen mit entsprechend fest verbauten Möbeleinheiten, die vorher fest definierte Kundenanforderungen erfüllen. Ein nachträgliches Anpassen oder Verändern der Einrichtung ist nicht vorgesehen und gegebenenfalls nur mit hohem Aufwand möglich. Der nachträgliche Umbau eines Freizeitfahrzeugs ist aber in der Regel nicht wirtschaftlich umsetzbar. Das kann auch dazu führen, dass zum Saisonende Restbestände nur mit erheblichen Abschlägen verkauft werden können.

Der vorliegenden Erfindung liegt die Aufgabe zugrunde, eine Anordnung für ein Freizeitfahrzeug und ein Freizeitfahrzeug anzugeben, die in verbesserter Weise ausgestaltet sind.

Die Aufgabe wird durch eine Anordnung mit den Merkmalen des unabhängigen Patentanspruchs 1 und durch ein Freizeitfahrzeug mit den Merkmalen des Patentanspruchs 10 gelöst. Vorteilhafte Weiterbildungen der Erfindung sind in den Unteransprüchen angegeben.

Die Aufgabe wird durch eine Anordnung für ein Freizeitfahrzeug, insbesondere für ein Wohnmobil oder einen Wohnwagen, gelöst, wobei Installationsleitungen an einer ersten Seite des Freizeitfahrzeugs angeordnet sind und sich über einen ersten Installationsbereich an der ersten Seite erstrecken, wobei Installationsleitungen an einer zweiten Seite des Freizeitfahrzeugs angeordnet sind und sich über einen zweiten Installationsbereich an der zweiten Seite des Fahrzeugs erstrecken und wobei die Installationsleitungen an der ersten Seite mit den Installationsleitungen an der zweiten Seite verbunden sind.

Ferner wird die Aufgabe durch ein Freizeitfahrzeug, insbesondere ein Wohnmobil oder einen Wohnwagen, mit solch einer Anordnung gelöst.

Durch die vorgeschlagene Ausgestaltung kann es insbesondere ermöglicht werden, dass die Anzahl von unterschiedlichen Fahrzeugen beziehungsweise Fahrzeugtypen auf ein Minimum reduziert werden kann. Speziell kann dann aus einigen wenigen Fahrzeuglängen eine sehr große Anzahl an unterschiedlichsten Grundrissen realisiert werden. Hierbei kann auch ein nachträglicher Umbau des Freizeitfahrzeugs ermöglicht werden. Insbesondere kann dann vor dem Verkauf an einen Endkunden gegebenenfalls noch eine Umrüstung erfolgen, so dass eine flexible Anpassung an die Kundennachfrage möglich ist.

Bei einer vorteilhaften Realisierung kann der Innenraum des Freizeitfahrzeugs in drei Zonen unterteilt werden, die jeweils einzeln durch unterschiedlichste Module an unterschiedliche Anforderungen angepasst werden können.

Die Grundinstallation für Gas, Wasser, Abwasser und Strom ist vorzugsweise einheitlich vorgesehen und kann je nach Bedarf für die Benutzung der unterschiedlichen Module angeschlossen werden. Sämtliche Ver- und Entsorgungsleitungen einschließlich der Entnahme- und Füllstellen mit Schnellverschlüssen können bereits in der Grundausstattung vorgesehen und in jeder Zone verlegt sein. Die Verlegung kann hierbei in vorteilhafter Weise im Fußboden und/oder unter dem Fußboden erfolgen, so dass keine auftragenden Elemente stören. In vorteilhafter Weise kann eine Verlegung bei einem Doppelboden realisiert werden.

Außerdem können in vorteilhafter Weise mehrgleisige Schienensysteme über alle drei Zonen hinweg realisiert werden. Dadurch lassen sich unterschiedliche Module, wie zum Beispiel auch Sitze mit integriertem Dreipunktgurt, individuell fest einbauen.

Die Innenraumlänge kann durch ein ausklappbares Heckelement vergrößert werden. Dies ist insbesondere für eine Sitzgruppe oder ein Bett vorteilhaft. Das ausklappbare Heckelement hat den Vorteil, dass die Gesamtfahrzeuglänge während der Fahrt kürzer ist. Im Stand kann dann gewissermaßen eine größere Gesamtfahrzeuglänge realisiert werden.

Ferner ist in vorteilhafter Weise eine große seitliche Öffnung durch eine vorzugsweise zweiteilige Flügeltür vorgesehen. Hierdurch kann ein sehr großer Eingang ermöglicht werden, der einen komfortablen Zustieg ermöglicht. Zum anderen kann hierdurch die Verbindung des Innenraums mit dem Außenbereich in vorteilhafter Weise realisiert werden. Die Zone mit der Flügeltür, insbesondere die frontseitige Zone, kann dadurch gewissermaßen auch funktionsmäßig als Garage genutzt werden, da ein Beladen von zum Beispiel Fahrrädern oder anderen sperrigen Gegenständen über die zweiteilige Flügeltür gut möglich ist.

Ein oberer Bereich der Seitenwände ist vorzugsweise mit Fixierungspunkten vorgerüstet, die es ermöglichen, unterschiedlich große Taschen als Stauräume aufzuhängen. Zur Befüllung beziehungsweise Entnahme beziehungsweise Nutzung der darin befindlichen Gegenstände können die Taschen gegebenenfalls einfach heruntergenommen werden. Die Taschen können gegebenenfalls auch nach draußen mitgenommen werden.

Je nach Ausgestaltung können somit ein oder mehrere der folgenden Vorteile realisiert werden. Es kann eine individuelle Anpassung an unterschiedliche Kundenanforderungen erfolgen. Eine nachträgliche Umrüstung ist beispielsweise vom Händler oder auch vom Endkunden realisierbar, wobei gegebenenfalls durch einen Zukauf beziehungsweise eine Leihe von speziellen Modulen eine sehr einfache Anpassung beziehungsweise Umrüstung ermöglicht sein kann. Es kann eine Anpassung der Anzahl der installierten Sitze mit vorzugsweise integriertem Dreipunktgurt ermöglicht sein. Beispielsweise können zwei bis etwa sieben Sitze installiert werden. Außerdem kann gegebenenfalls ein großzügiger seitlicher Zugang durch die doppelflügelige Tür und somit auch eine Nutzung der vorderen (frontseitigen) Zone als (temporäre) Garage ermöglicht werden. Eine ausklappbare Heckverlängerung zur Vergrößerung des Innenraums während der Nutzung im Standbetrieb kann zum Beispiel für Längsbetten oder eine Rundsitzgruppe oder dergleichen ermöglicht werden. Fixierungspunkte zur Aufnahme von unterschiedlichen Taschen zur Verstauung unterschiedlicher Gegenstände sowie eine einfache Entnahme der Taschen können realisiert werden.

Bei einer möglichen Realisierung des Freizeitfahrzeugs können beispielsweise als Serienausstattung die folgenden Elemente vorgesehen sein. Ein Schienensystem, ein linker Stauschrank, ein Küchenmodul mit Spülbecken und Kartuschenkocher, ein festes Bett hinten, ein Frischwassertank mit 50 Litern, ein Abwassertank mit 100 Litern in Unterflurbauweise, eine Dieselheizung, eine Wohnraumbatterie, eine doppelflügelige Aufbautür mit Tasche zum Verstauen von Küchenutensilien, eine breite ausfahrbare Eintrittsstufe, eine Stauraumklappe im Heck als Zugang zum Stauraum unter dem Bett, eine Bodenabsenkung im Heck; eine Stauraumklappe hinten links zum seitlichen Zugang des Heckstauraums, Fenster vorne und hinten links und ein Fenster hinten rechts.

Zusätzlich zu dieser Serienausstattung können auf Kundenwunsch die folgenden Optionen ermöglicht werden. Zum Sitzen können drei bis sieben Sitze mit Dreipunktgurt in ein Schienensystem einhängbar sein und ein Isofixgestell speziell für Kindersitze vorgesehen sein. Zum Wohnen können eine Doppelsitzbank, die zusammenlegbar und auch draußen verwendbar ist, Einzelsitze, die zusammenlegbar und auch draußen verwendbar sind, ein Tisch, der zusammenlegbar und auch draußen verwendbar ist, ein Dachstauschrank vorne links, der flexibel anordenbar ist, ein Dachstauschrank vorne links, der fest angeordnet ist, und ein Möbelmodul vorne links zur Auswahl stehen. Für den Stauschrank links können eine mobile Toilette im Stauraum links, eine fest installierte Toilette im Stauschrank links, ein Waschbecken im Stauschrank links, ein Raumtrennvorhang für eine Toilettenbenutzung sowie eine Anordnung aus Duschwanne, Duschtrennvorgang und Brauseschlauch zur Auswahl stehen.

Für eine Küche können eine Kühl- und/oder Gefrierbox, ein Induktionskochfeld, eine Zusatzkühlbox, ein Durchlauferhitzer für warmes Wasser, ein Dachstauschrank, der flexibel anordenbar ist, und ein Dachstauschrank, der fest anordenbar ist, zur Auswahl stehen. Im Schlafbereich können ein Klappbett, Einzelsitze, die auch zum Bett umgebaut werden können, ein Dachstauschrank links und ein Dachstauschrank rechts, die flexibel angeordnet sein können, ein Dachstauschrank links und ein Dachstauschrank rechts, die fest angeordnet sein könne, und eine Bettverlängerung zur Auswahl stehen. Als Aufbau kann eine große Heckklappe zum besseren Zugang in den Heckstauraum zur Auswahl stehen, die insbesondere in Verbindung mit dem Klappbett oder den klappbaren Einzelsitzen beziehungsweise Einzelbetten genutzt werden kann.

Somit ist eine individuelle Anpassung an unterschiedlichste Kundenanforderungen möglich. Eine nachträgliche Umrüstung vom Händler oder auch Endkunden durch den Zukauf oder die Ausleihe von speziellen Modulen ist sehr einfach möglich. Ferner ist eine Anpassung der Anzahl der Sitze mit integriertem Dreipunktgurt möglich, zum Beispiel im Bereich von zwei bis sieben Sitzen. Außerdem ist ein großzügiger seitlicher Zugang durch eine doppelflügelige Tür und somit auch eine Nutzung der vorderen Zone als Garage möglich. Die ausklappbare Heckverlängerung kann zur Vergrößerung des Innenraums während der Nutzung im Standbetrieb, insbesondere für Längsbetten oder eine Rundsitzgruppe, genutzt werden. Fixierungspunkte können zur Aufnahme von unterschiedlichen Taschen zur Verstauung unterschiedlicher Gegenstände dienen, wobei eine einfache Entnahme der Taschen möglich sein kann.

Vorteilhaft ist es, dass ein Innenraum des Freizeitfahrzeugs in mehrere Zonen aufgeteilt ist, dass sich die Installationsleitungen an der ersten Seite über alle Zonen erstrecken und dass sich die Installationsleitungen an der zweiten Seite über eine heckseitige Zone und zumindest in eine an die heckseitige Zone anschließende mittlere Zone erstrecken. Auf diese Weise kann an den beiden Fahrzeugseiten eine vorteilhafte Anpassung an unterschiedliche Kundenwünsche erfolgen. Insbesondere können hierbei je nach gewählter Ausstattung die Entnahmestellen beziehungsweise Füllstellen realisiert werden.

Vorteilhaft ist es, dass die Installationsleitungen eine variable Installation für eine Wasserversorgung und/oder eine Abwasserentsorgung und/oder eine Gasversorgung und/oder eine Stromversorgung in dem ersten Installationsbereich und dem zweiten Installationsbereich ermöglichen. Die Installationsleitungen können dann einheitlich realisiert sein. Je nach gewähltem Grundriss kann dann die individuell gewählte Installation realisiert werden. Somit ist eine variable Installation möglich.

Vorteilhaft ist es, dass die heckseitige Zone so vorgegeben ist, dass in der heckseitigen Zone wahlweise eine Ausstattungsvariante mit einem festen Bett und einer niedrigen Klappe für einen Zugang für einen Stauraum unter dem Bett und/oder eine Ausstattungsvariante mit einem klappbaren Bett und eine Heckklappe mit Bettverlängerung und/oder eine Ausstattungsvariante mit faltbaren Einzelsitzen, die auch zu Betten umgebaut und auch draußen verwendbar werden können, installierbar ist. Hierbei kann die heckseitige Zone zunächst im Grundriss einheitlich vorgegeben sein. Dann kann die heckseitige Zone je nach Kundenwunsch realisiert werden.

Vorteilhaft ist es auch, dass die sich an die heckseitige Zone anschließende mittlere Zone so vorgegeben ist, dass in der mittleren Zone wahlweise eine Ausstattungsvariante mit einem Stauschrank und einem Küchenmodul und/oder eine Ausstattungsvariante mit einem Stauschrank, einer mobilen oder fest eingebauten Toilette, einem Raumtrennvorhang, einem Küchenmodul und einer Kühlbox und/oder eine Ausstattungsvariante mit einem Stauschrank, einer mobilen oder fest eingebauten Toilette, einem Raumtrennvorhang, einer Duschwanne und einem Brauseschlauch, einem Waschbecken, einem Küchenmodul und einer Kühlbox und/oder eine Ausstattungsvariante mit einem Stauschrank, einer mobilen oder fest eingebauten Toilette, einem Raumtrennvorhang, einem Küchenmodul, einer Kühlbox und einer Zusatzkühlbox installierbar ist. Hierdurch kann in vorteilhafter Weise ein Grundriss realisiert werden, in dem die mittlere Zone einheitlich angeordnet ist. In Bezug auf den jeweiligen Kundenwunsch kann dann eine Ausstattung der mittleren Zone erfolgen.

Außerdem ist es vorteilhaft, dass die frontseitige Zone so vorgegeben ist, dass in der frontseitigen Zone wahlweise eine Ausstattungsvariante ohne Module und/oder eine Ausstattungsvariante mit einer herausnehmbaren Doppelsitzbank oder Einzelstühlen und/oder eine Ausstattungsvariante mit zwei Einzelsitzen und/oder eine Ausstattungsvariante mit drei Einzelsitzen und/oder eine Ausstattungsvariante mit zwei seitlich angebrachten Einzelsitzen und/oder eine Ausstattungsvariante mit einem Möbelmodul installierbar ist. Somit kann die frontseitige Zone in vorteilhafter Weise vorgegeben sein. Die frontseitige Zone kann hierbei auch eine Nutzung entsprechend einer Garage ermöglichen, so dass beispielsweise Fahrräder transportiert werden können. Dies ist insbesondere bei einer Ausstattungsvariante ohne Modul möglich.

Ferner ist es vorteilhaft, dass entsprechend einem modularen Aufbau bestimmte Ausstattungsvarianten für die Zonen des Innenraums aus den Ausstattungsvarianten für die heckseitige Zone und/oder den Ausstattungsvarianten für die mittlere Zone und/oder den Ausstattungsvarianten für die frontseitige Zone ausgewählt sind. Hierdurch kann eine Herstellung des Freizeitfahrzeugs entsprechend einem Modulbaukasten erfolgen. Hierbei kann auch eine spätere Umrüstung beziehungsweise Erweiterung ermöglicht sein.

Außerdem ist es vorteilhaft, dass zumindest ein herausnehmbarer Einzelsitz vorgesehen ist, der in der heckseitigen Zone beziehungsweise in der mittleren Zone installierbar ist. Durch solche zusätzlichen Einzelsitze kann die Nutzung des Freizeitfahrzeugs weiter verbessert sein. Insbesondere kann das Freizeitfahrzeug dann in verbesserter Weise im Alltag genutzt werden, um Personen zu transportieren.

Außerdem ist es vorteilhaft, dass eine Doppeltür vorgesehen ist, die in der frontseitigen Zone an der zweiten Zone vorgesehen ist. Auf diese Weise wird ein komfortabler Zugang ermöglicht. Außerdem wird hierdurch auch eine vorteilhafte Nutzung der frontseitigen Zone als Garage ermöglicht.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug mit einer Anordnung entsprechend einem Ausführungsbeispiel der Erfindung, wobei eine Standardausstattung mit einer Vorinstallation sämtlicher Ver- und Entsorgungsleitungen inklusiv Entnahme- und Füllstellen in jeder Zone durch Schnellverschlüsse veranschaulicht ist;
- Fig. 2: das Freizeitfahrzeug mit der Anordnung entsprechend dem Ausführungsbeispiel, wobei eine Standardausstattung mit einem Schienensystem, einem Stauschrank links, einem Küchenmodul rechts mit Spüle und Kartuschenkocher, einem Frisch- und Abwassertank sowie einer zweiflügeligen Aufbautür rechts veranschaulicht ist;
- Fig. 3: das Freizeitfahrzeug mit der Anordnung entsprechend dem Ausführungsbeispiel, wobei Ausstattungsvarianten veranschaulicht sind; und
- Fig. 4 bis 8: das Freizeitfahrzeug mit der Anordnung entsprechend dem Ausführungsbeispiel, wobei jeweils weitere Anschauungsvarianten veranschaulicht sind.

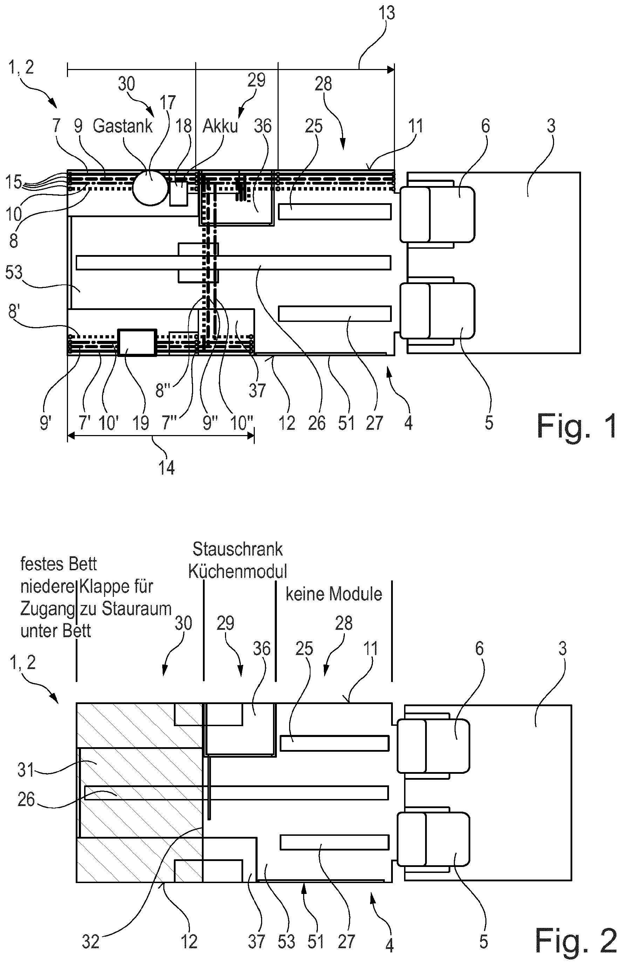

Fig. 1 bis 8 zeigen jeweils ein Freizeitfahrzeug 1 mit einer Anordnung 2 entsprechend einem Ausführungsbeispiel, wobei unterschiedliche Ausstattungsvarianten veranschaulicht sind. In diesem Ausführungsbeispiel ist das Freizeitfahrzeug 1 als Wohnmobil ausgestaltet. Hierbei weist das Freizeitfahrzeug 1 eine schematisch dargestellte Fahrzeugkabine 3 und einen Innenraum 4 auf. Je nach Ausgestaltung des Freizeitfahrzeugs 1 können Sitze 5, 6 der Fahrzeugkabine 3 hierbei auch drehbar sein, um diese im geparkten Zustand zu nutzen.

Fig. 1 zeigt die Standardausstattung des Freizeitfahrzeugs 1, wobei eine Vorinstallation der Installationsleitungen 7, 8, 9, 10 an einer ersten Seite 11 des Freizeitfahrzeugs 1 gezeigt, die in diesem Ausführungsbeispiel die linke Fahrzeugseite 11 ist. Ferner ist die Vorinstallation der Installationsleitungen 7', 8', 9', 10' an einer zweiten Seite 12 des Freizeitfahrzeugs gezeigt, die in diesem Ausführungsbeispiel die rechte Fahrzeugseite 12 ist. Außerdem sind Verbindungsleitungen 7", 8", 9", 10" dargestellt, die die Installationsleitungen 7 bis 10 mit den entsprechenden Installationsleitungen 7' bis 10' verbinden.

Wie es exemplarisch in Fig. 1 gezeigt ist, erstrecken sich die Installationsleitungen 7 bis 10 über einen ersten Installationsbereich 13. Der erste Installationsbereich 13 umfasst in diesem Ausführungsbeispiel alle Zonen 28, 29, 30. Ferner erstrecken sich die Installationsleitungen 7', 8', 9', 10' über einen zweiten Installationsbereich 14. Der zweite Installationsbereich 14 schließt die Zone 30 ein und erstreckt sich an der zweiten Seite 12 über die Zone 29. Die Zone 29 ist allerdings in diesem Ausführungsbeispiel nicht rechteckig ausgestaltet und an der zweiten Seite 12 schmäler als an der ersten Seite 11.

Bei den Installationsleitungen 7 bis 10, 7' bis 10' handelt es sich in diesem Ausführungsbeispiel um Versorgungs- und Entsorgungsleitungen. Die Leitungen 7, 7', 7" dienen zur Wasserversorgung. Die Leitungen 8, 8', 8" dienen zur Abwasserentsorgung. Die Leitungen 9, 9', 9" dienen zur Gasversorgung. Die Leitungen 10, 10', 10" dienen zur Stromversorgung.

Entnahme- und Füllstellen können hierbei durch Schnellverschlüsse realisiert sein. In Fig. 1 sind exemplarisch Entnahmestellen 15 für die Leitungen 7, 9, 10 und eine Füllstelle 16 für die Leitung 8, die für das Abwasser dient, gekennzeichnet.

Das Freizeitfahrzeug 1 weist außerdem einen Gastank 17, einen Akkumulator 18 und einen Wassertank 19 auf.

Somit kann ein Grundriss für ein Reisemobil oder einen Caravan realisiert werden. In entsprechender Weise kann ein Grundriss für einen Wohnwagen realisiert werden, wobei für diesen die Fahrzeugkabine 3 entfällt.

In diesem Ausführungsbeispiel weist das Freizeitfahrzeug 1 außerdem Schienen 25, 26, 27 auf, die als Befestigungsmöglichkeiten dienen können.

Unter Bezugnahme auf Fig. 2 bis 8 sind exemplarisch mögliche Ausgestaltungsvarianten für das Freizeitfahrzeug 1 beschrieben. Der Grundriss des Freizeitfahrzeugs 1 ist in drei Zonen 28, 29, 30 aufgeteilt. In diesem Ausführungsbeispiel sind von der Fahrzeugkabine 3 aus betrachtet eine erste Zone 28, eine zweite Zone 29 und eine dritte Zone 30 vorgesehen. Die Ausgestaltung des Freizeitfahrzeugs 1 beziehungsweise des Grundrisses des Freizeitfahrzeugs 1 ist aber nicht notwendigerweise auf genau drei Zonen 28, 29, 30 beschränkt. In diesem Ausführungsbeispiel ist die Zone 28 die frontseitige Zone 28, die Zone 29 ist die mittlere Zone 29 und die Zone 30 ist die heckseitige Zone 30.

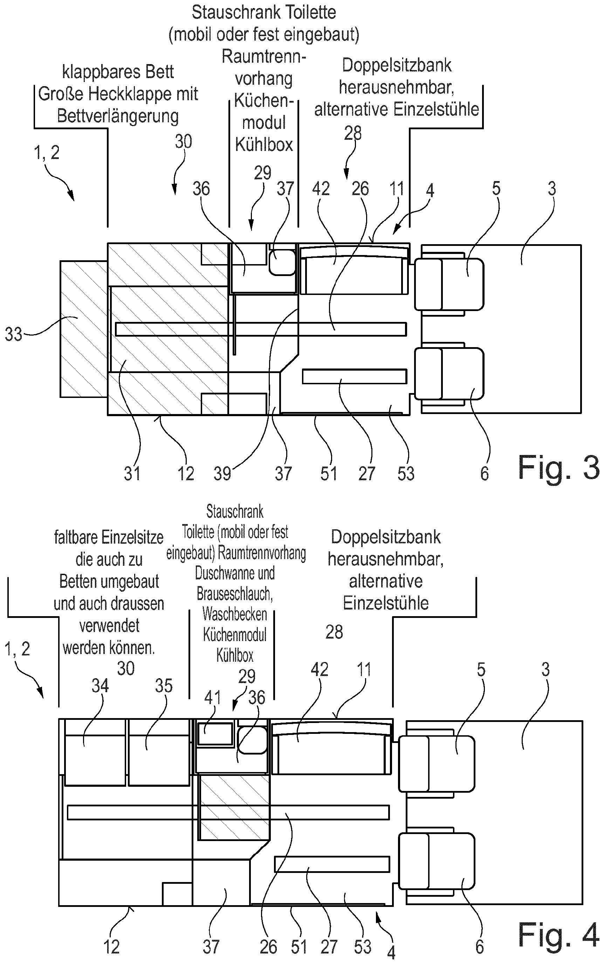

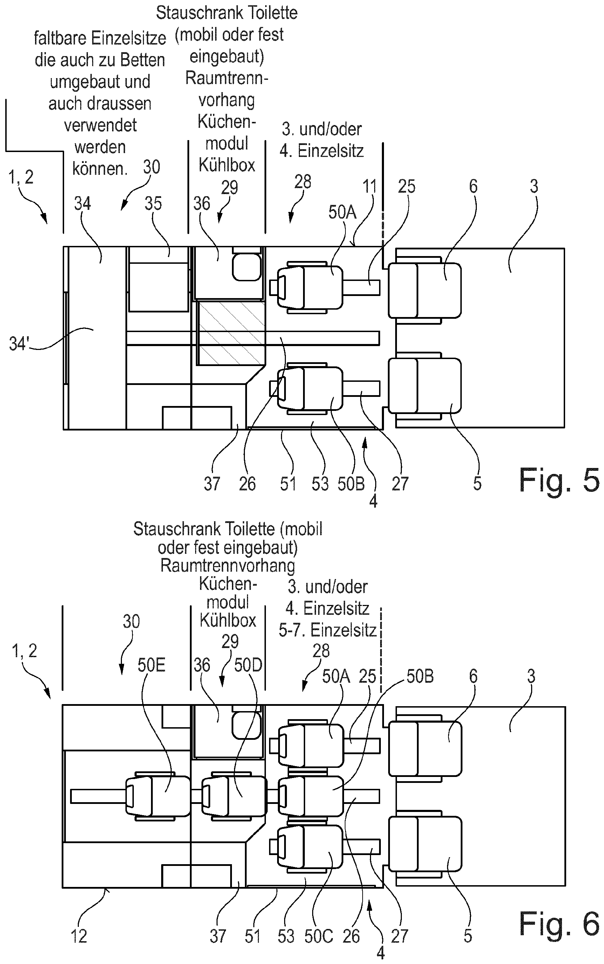

Zunächst sind mögliche Ausstattungsvarianten für die heckseitige Zone 30 beschrieben. Wie in Fig. 2 dargestellt ist, kann eine Ausstattungsvariante für die Zone 30 ein festes Bett 31 und eine niedere Klappe 32 für einen Zugang zu einem Stauraum unter dem Bett 31 aufweisen. Wie in Fig. 3 dargestellt ist, kann eine weitere Ausstattungsvariante für die Zone 30 ein klappbares Bett 31 und eine große Heckklappe 33 mit einer Bettverlängerung aufweisen. Wie es in Fig. 4 dargestellt ist, kann eine weitere Ausstattungsvariante für die Zone 30 faltbare Einzelsitze 34, 35 aufweisen, die auch zu Betten umgebaut und auch draußen verwendet werden können. Wie es in Fig. 5 dargestellt ist, kann beispielsweise der Einzelsitz 34 zu einem Bett 34' umgebaut sein.

Nachfolgend sind mögliche Ausstattungsvarianten für die Zone 29 näher erläutert. Wie es in Fig. 2 dargestellt ist, kann eine Ausstattungsvariante für die Zone 29 einen Stauschrank 36 und ein Küchenmodul 37 aufweisen. Wie es in Fig 3 dargestellt ist, kann eine weitere Ausstattungsvariante einen Stauschrank 36, eine mobile oder fest eingebaute Toilette 38, einen Raumtrennvorhang 39, einen Küchenmodul 37 und eine Kühlbox (nicht dargestellt) aufweisen. Wie es in Fig. 4 dargestellt ist, kann eine weitere Ausstattungsvariante für die Zone 29 einen Stauschrank 36, eine Toilette 38, die mobil oder fest eingebaut sein kann, einen Raumtrennvorhang 39, eine Duschwanne 41 und einen Brauseschlauch (nicht dargestellt) und ein Waschbecken (nicht dargestellt) sowie ein Küchenmodul 37 und eine Kühlbox (nicht dargestellt) umfassen.

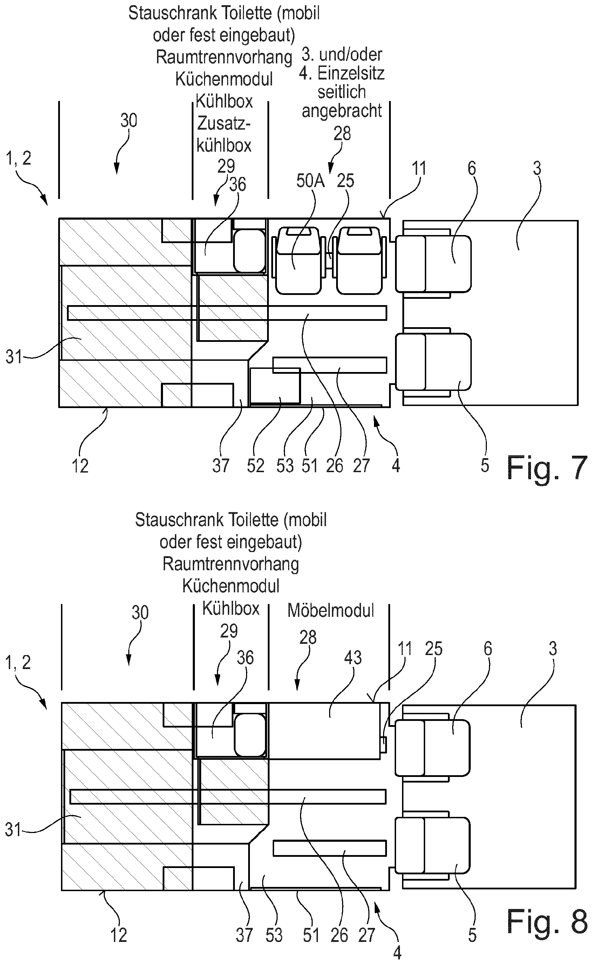

Im Folgenden sind Ausstattungsvarianten für die Zone 30 näher beschrieben. Wie es in Fig. 2 dargestellt ist, kann die Zone 28 ohne Module realisiert sein. Dadurch kann die Zone 28 insbesondere als Garage genutzt werden. Wie es in Fig. 3 dargestellt ist, kann eine weitere Ausstattungsvariante für die Zone 30 eine Doppelsitzbank 42, die herausnehmbar sein kann, oder auch Einzelstühle (nicht dargestellt) aufweisen. Wie es in Fig. 5 dargestellt ist, kann eine weitere Ausstattungsvariante Einzelsitze 50A, 50B aufweisen. Wie es in Fig. 6 dargestellt ist, kann eine weitere Ausstattungsvariante für die Zone 28 Einzelsitze 50A, 50B, 50C aufweisen. Wie es in Fig 7 dargestellt ist, kann eine weitere Ausstattungsvariante seitlich angebrachte Einzelsitze 50A, 50B aufweisen. Wie es in Fig. 8 dargestellt ist, kann eine weitere Ausstattungsvariante für die Zone 28 ein Möbelmodul 43 aufweisen.

Ferner können gegebenenfalls zusätzliche Einzelsitze in der mittleren Zone 29 und der heckseitigen Zone 30 vorgesehen sein. Wie es in Fig. 6 dargestellt ist, können in den Zonen 29, 30 jeweils ein Einzelsitz 50D, 50E angeordnet sein. Diese Ausstattungsvariante eignet sich besonders, um das Freizeitfahrzeug 1 nicht nur zum Campen, sondern auch im sonstigen Alltag zu nutzen, insbesondere zum Transport von Personen. Die Einzelsitze 50A bis 50E, die in den Fig. 5 bis 7 dargestellt sind, können in vorteilhafter Weise an den Schienen 25, 26, 27 befestigt werden. Hierdurch kann insbesondere eine mobile Ausgestaltung der Einzelsitze 50A bis 50E realisiert werden, so dass die Einzelsitze 50A bis 50E je nach Bedarf montiert oder auch entfernt werden können. Dies kann durch den Kunden erfolgen, der dann je nach Bedarf eine geeignete Anzahl an Einzelsitzen 50A bis 50E einbauen kann.

Außerdem ist an der zweiten Seite 12 eine Doppeltür 51 vorgesehen. Eine Zusatzkühlbox 52 kann beispielsweise in das Küchenmodul 37 der Zone 29 eingeschoben werden. Die Entnahme kann hierbei über die Zone 28 erfolgen, wie es in Fig. 7 veranschaulicht ist.

Somit kann insbesondere eine Grundrissaufteilung für das Freizeitfahrzeug 1 in drei Zonen 28, 29, 30 erfolgen, die durch Schienensysteme 25, 26, 27 im Fußboden 53 und die Installationsleitungen 7 bis 10, 7' bis 10' an den Seiten (Seitenwänden) 11, 12 an unterschiedlichste Anforderungen individuell angepasst werden können. Die Individualisierung kann hierbei je nach Ausstattungsmerkmal vor einer Auslieferung an den Kunden oder auch vom Kunden selbst durchgeführt werden.

Das Fahrzeugkonzept eignet sich insbesondere als grundsätzliche Plattform für mehrere Ausstattungslinien oder Marken. Eine baulinien- oder markenspezifische Anpassung an die jeweilige Zielgruppe kann mit einfachen Mitteln erreicht werden. Insbesondere ermöglicht die beschriebene Ausgestaltung einen modularen Aufbau. Änderungen einzelner Module beziehungsweise einzelner Ausstattungsmerkmale können gegebenenfalls integriert werden, ohne dass eine wesentliche Neuentwicklung anderer Komponenten notwendig ist. Das Fahrzeugkonzept ermöglicht auch die Realisierung einer neuen Gattung von Freizeitfahrzeugen 1 durch eine sehr hohe Standardisierung und durch eine vereinfachte Produktion. Hierdurch kann auch eine kostengünstige Herstellung realisiert werden.

Die Erfindung ist nicht auf die beschriebenen Ausführungsformen beschränkt.

## Patentansprüche

1. Anordnung (2) für ein Freizeitfahrzeug (1), insbesondere für ein Wohnmobil oder einen Wohnwagen,
**dadurch gekennzeichnet,**
**dass** Installationsleitungen (7, 8, 9, 10) an einer ersten Seite (11) des Freizeitfahrzeugs (1) angeordnet sind und sich über einen ersten Installationsbereich (13) an der ersten Seite (11) erstrecken, dass Installationsleitungen (7', 8', 9', 10') an einer zweiten Seite (12) des Freizeitfahrzeugs (1) angeordnet sind und sich über einen zweiten Installationsbereich (14) an der zweiten Seite (12) des Freizeitfahrzeugs (1) erstrecken und dass die Installationsleitungen (7, 8, 9, 10) an der ersten Seite (11) mit den Installationsleitungen (7', 8', 9', 10') an der zweiten Seite (12) verbunden sind.

2. Anordnung nach Anspruch 1,
**dadurch gekennzeichnet,**
**dass** die Installationsleitungen (7, 7', 8, 8', 9, 9', 10, 10') eine variable Installation für eine Wasserversorgung und/oder eine Abwasserentsorgung und/oder eine Gasversorgung und/oder eine Stromversorgung in dem ersten Installationsbereich (13) und dem zweiten Installationsbereich (14) ermöglichen.

3. Anordnung nach Anspruch 1 oder 2,
**dadurch gekennzeichnet,**
**dass** ein Innenraum (4) des Freizeitfahrzeugs (1) in mehrere Zonen (28, 29, 30) aufgeteilt ist, dass sich die Installationsleitungen (7, 8, 9, 10) an der ersten Seite (11) über alle Zonen (28, 29, 30) erstrecken und dass sich die Installationsleitungen (7',8', 9', 10') an der zweiten Seite (12) über eine heckseitige Zone (30) und zumindest in eine an die heckseitige Zone (30) anschließende mittlere Zone (29) erstrecken.

4. Anordnung nach Anspruch 3,
**dadurch gekennzeichnet,**
**dass** die heckseitige Zone (30) so vorgegeben ist, dass in der heckseitigen Zone (30) wahlweise eine Ausstattungsvariante mit einem festen Bett (31) und einer niederen Klappe (32) für einen Zugang zu einem Stauraum unter dem Bett (31) und/oder eine Ausstattungsvariante mit einem klappbaren Bett (31) und einer großen Heckklappe (33) mit Bettverlängerung und/oder eine Ausstattungsvariante mit faltbaren Einzelsitzen (34, 35), die auch zu Betten umgebaut und auch draußen verwendet werden können, installierbar ist.

5. Anordnung nach Anspruch 3 oder 4,
**dadurch gekennzeichnet,**
**dass** die sich an die heckseitige Zone (30) anschließende mittlere Zone (29) so vorgegeben ist, dass in der mittleren Zone (29) wahlweise eine Ausstattungsvariante mit einem Stauschrank (36) und einem Küchenmodul (37) und/oder eine Ausstattungsvariante mit einem Stauschrank (36), einer mobilen oder fest eingebauten Toilette (38), einem Raumtrennvorhang (39), einem Küchenmodul (37) und einer Kühlbox und/oder eine Ausstattungsvariante mit einem Stauschrank (36), einer mobilen oder fest eingebauten Toilette (38), einem Raumtrennvorhang (39), einem Küchenmodul (37), einer Kühlbox und einer Zusatzkühlbox (52) installierbar ist.

6. Anordnung nach einem der Ansprüche 3 bis 5
**dadurch gekennzeichnet,**
**dass** die frontseitige Zone (28) so vorgegeben ist, dass in der frontseitigen Zone (28) wahlweise eine Ausstattungsvariante ohne Module und/oder eine Ausstattungsvariante mit einer herausnehmbaren Doppelsitzbank (42) oder Einzelstühlen und/oder eine Ausstattungsvariante mit zumindest einem Einzelsitz (50A, 50B, 50C) und/oder eine Ausstattungsvariante mit zwei Einzelsitzen (50A, 50B) und/oder eine Ausstattungsvariante mit drei Einzelsitzen (50A, 50B, 50C) und/oder eine Ausstattungsvariante mit einer herausnehmbaren Doppelsitzbank (42) und/oder eine Ausstattungsvariante mit zumindest einem seitlich angebrachten Einzelsitz (50A, 50B) und/oder eine Ausstattungsvariante mit zwei seitlich angebrachten Einzelsitzen (50A, 50B) installierbar ist.

7. Anordnung nach einem der Ansprüche 3 bis 6,
**dadurch gekennzeichnet,**
**dass** entsprechend einem modularen Aufbau bestimmte Ausstattungsvarianten für die Zonen (28, 29, 30) des Innenraums (4) aus den Ausstattungsvarianten für die heckseitige Zone (30) und/oder den Ausstattungsvarianten für die mittlere Zone (29) und/oder den Ausstattungsvarianten für die frontseitige Zone (28) ausgewählt sind.

8. Anordnung nach einem der Ansprüche 3 bis 7,
**dadurch gekennzeichnet,**
**dass** zumindest ein herausnehmbarer Einzelsitz (50D, 50E) vorgesehen ist, der an der heckseitigen Zone (30) beziehungsweise an der mittleren Zone (29) installierbar ist.

9. Anordnung nach einem der Ansprüche 3 bis 7,
**dadurch gekennzeichnet,**
**dass** eine Doppeltür (51) vorgesehen ist, die in der frontseitigen Zone (28) an der zweiten Seite (12) vorgesehen ist.

10. Freizeitfahrzeug (1), insbesondere Wohnmobil oder Wohnwagen, mit einer Anordnung (2) nach einem der Ansprüche 1 bis 9.
